# EUROPÄISCHE PATENTSCHRIFT

(11) **EP 1 341 290 B1**
(45) Veröffentlichungstag und Bekanntmachung des Hinweises auf die Patenterteilung: **13.12.2006**
(21) Anmeldenummer: 02004529.0
(22) Anmeldetag: 27.02.2002
(51) Int. Cl.: H02K 7/00, F04D 29/04

(54) **Motor-Pumpen-Aggregat, insbesondere für eine Kraftfahrzeug-Bremsvorrichtung**
Motor-pump assembly, in particular for a vehicle braking system
Ensemble motopompe, en particulier pour système de freins pour véhicule

(43) Veröffentlichungstag der Anmeldung: 03.09.2003
(73) Patentinhaber: SIEMENS AKTIENGESELLSCHAFT, 80333 München (DE)
(72) Erfinder: Hartmann, Markus, 97291 Tüngersheim (DE); Steegmueller, Horst, 97076 Würzburg (DE); Tupy, Matthias, 97218 Gerbrunn (DE)

(56) Entgegenhaltungen:
- GB-A- 771 595
- US-A- 4 049 364

## Beschreibung

Die Erfindung bezieht sich auf ein Motor-Pumpen-Aggregat gemäß Patentanspruch 1 oder 2 und eine Bremsvorrichtung für ein Kraftfahrzeug gemäß Patentanspruch 3.

Ein Motor-Pumpen-Aggregat mit den Merkmalen des Oberbegriffs des Patentanspruchs 1 oder 2 ist durch die EP 0 645 875 B1 und durch US 4 049 364 bekannt. Die Pumpe ist bei einer Kraftfahrzeug-Bremsvorrichtung, insbesondere für eine ABS-Bremsvorrichtung, normalerweise als Hydraulikpumpe ausgebildet; dabei werden Pumpenstößel über Excenter von der Pumpenwelle angetrieben. Die Pumpenwelle ist als verlängertes einstückiges Rotorwellenende des Elektromotors ausgebildet.

Aus dem Dokument DE 41 20 665 A1 ist ebenfalls eine elektromotorisch angetriebene Hydraulikpumpe bekannt, die zum Beispiel in einem Antiblockiersystem in einem Kraftfahrzeug eingesetzt wird. Dort ist die Pumpenwelle als selbständiges Pumpenbauteil mit einem Pumpenwellenende beim Zusammenbau von Elektromotor und Pumpe mit einem entsprechenden Rotorwellenende des Elektromotors gekuppelt.

Zur gegenseitigen Ankupplung des abtriebsseitigen Pumpenwellenendes des Elektromotors einerseits mit dem antriebsseitigen Pumpenwellenende der Pumpe andererseits kann ein Kupplungsstück vorgesehen werden, dass eine kardangelenkartige Antriebsverbindung mit dem Rotorwellenende und dem Pumpenwellenende über jeweils eine formschlüssige axiale Steckaufnahme vorsieht. Eine solche Kupplung ist zum Beispiel aus dem Dokument GB 771,595 bekannt, wo die Kopplung zwischen der Welle einer elektrischen Maschine und einer Pumpeneinheit mit einem zusätzlichen kardangelenkartigen Kupplungsstück (Oldham coupling) offenbart ist.

Gemäß Aufgabe vorliegender Erfindung soll eine gegenüber unerwünschten Drehschwingungen und Axialschüben geschützte Antriebsverbindung bei derartigen kardangelenkartigen Antriebsverbindungen mit axial gegenseitiger formschlüssiger Steckaufnahme von Rotorwellenende und Pumpenwellenende über ein Kupplungsstück vermieden werden.

Die Lösung dieser Aufgabe gelingt erfindungsgemäß durch ein Motor-Pumpen-Aggregat gemäß Patentanspruch 1 oder 2 und einer Kraftfahrzeug-Bremsvorrichtung gemäß Patentanspruch 3.

Ausgehend von der Erkenntnis, dass zu frühzeitigen Schäden führende Drehschwingungen und Axialschübe insbesondere durch Momentenschwankungen der Pumpe und durch ein radiales bzw. axiales Toleranzspiel zwischen den formschlüssig in dem Kupplungsstück in Mitnahme stehenden Enden der Rotorwelle bzw. der Pumpenwellen begründet sind, ist durch die erfindungsgemäße Konizität bei gleichzeitiger geringer gegenseitiger Vorspannung des Rotorwellenendes gegenüber dem Pumpenwellenende mit einfachen Mitteln eine fertigungsbedingte Lose zwischen den anzutreibenden Teilen im Kupplungsstück eliminierbar und sind aufgrund der dadurch gewährleisteten Spielfreiheit innerhalb des Kupplungsstücks die Momentenschwankungen, die durch die Bewegung auftreten und über das Kupplungsstück in den Motor eindringen und innerhalb dieses z.B. zu Wicklungsschäden führen, vermeidbar.

Die Erfindung sowie vorteilhafte Ausgestaltungen der Erfindung werden im folgenden anhand schematischer Ausführungsbeispiele in der Zeichnung näher erläutert; darin zeigen:
- FIG 1: in einem axialen Teilschnittbild ein komplett montiertes Motor-Pumpen-Aggregat;
- FIG 2: in einem vergrößerten Ausschnitt aus FIG 1 die gegenseitige kardengelenkartige Drehmitnahmeverbindung des Rotorwellenendes des Elektromotor einerseits und des Pumpenwellenendes der Pumpe andererseits über ein Kupplungsstück;
- FIG 3: in perspektivisch vergrößertem Ausschnitt aus FIG 2 eine kardangelenkartige Steckaufnahme mit einer konischen Ausbildung der Flach-Mitnahmestege des Rotorwellenendes bzw. des Pumpenwellenendes und einer Ausbildung der korrespondierenden Mitnahmenuten des Kupplungsstückes
- FIG 4: in einem perspektivisch vergrößerten Ausschnitt aus FIG 2 eine kardangelenkartigen Steckaufnahme mit einer konischen Ausbildung der Mitnahmenuten des Kupplungsstückes und einer Ausbildung der Flach-Mitnahmestege des Rotorwellenendes bzw. des Pumpenwellenendes.

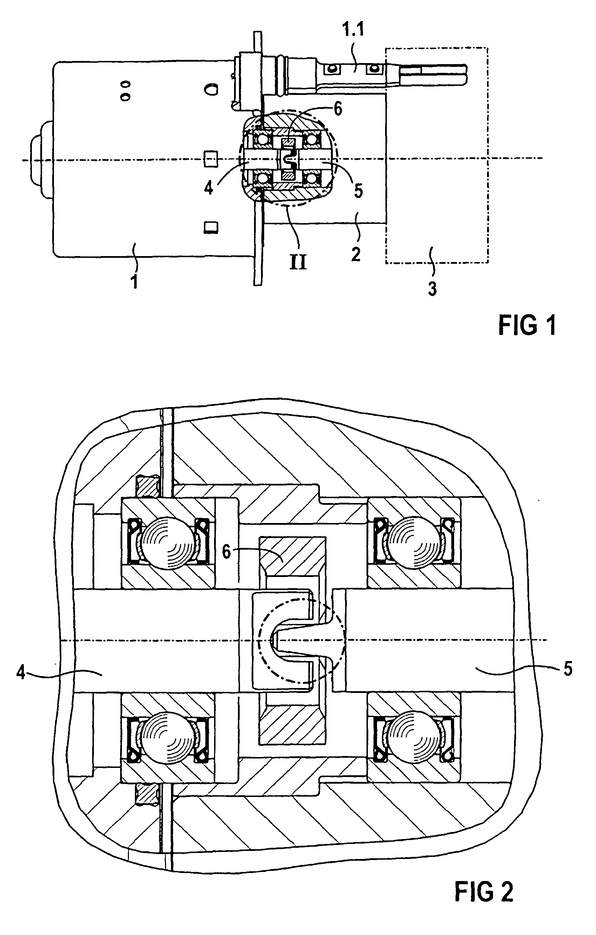

FIG 1 zeigt in einem axialen Teilschnittbild ein komplettes, z. B. für eine Kraftfahrzeug-Antiblockier-Bremsvorrichtung einsetzbares, Motor-Pumpen-Aggregat. An einen Elektromotor 1 ist stirnseitig und axial fluchtend eine Pumpe 2 für eine Brems-Hydraulikflüssigkeit angeflanscht und an der anderen Stirnfläche der Pumpe 2 ein Elektronikgehäuse 3 angebaut, dass eine - hier nicht gesonderte dargestellte, jedoch z.B. aus der EP 0 695 875 B1 bekannte - Anschlusseinheit, insbesondere eine elektrische bzw. elektronische Versorgungs- bzw. Steuereinheit, aufnimmt und über eine Anschlussverbindung 1.1 mit den Steuer- bzw. Versorgungsanschlüssen des Elektromotors 1 in Verbindung steht.

Der Elektromotor 1 weist ein pumpenseitiges Rotorwellenende 4 auf, das über ein Kupplungsstück 6 mit einem Pumpenwellenende 5 der Pumpe 2, z.B. beim axialen Zusammenbau von Elektromotor 1 und Pumpe 2, gekuppelt ist.

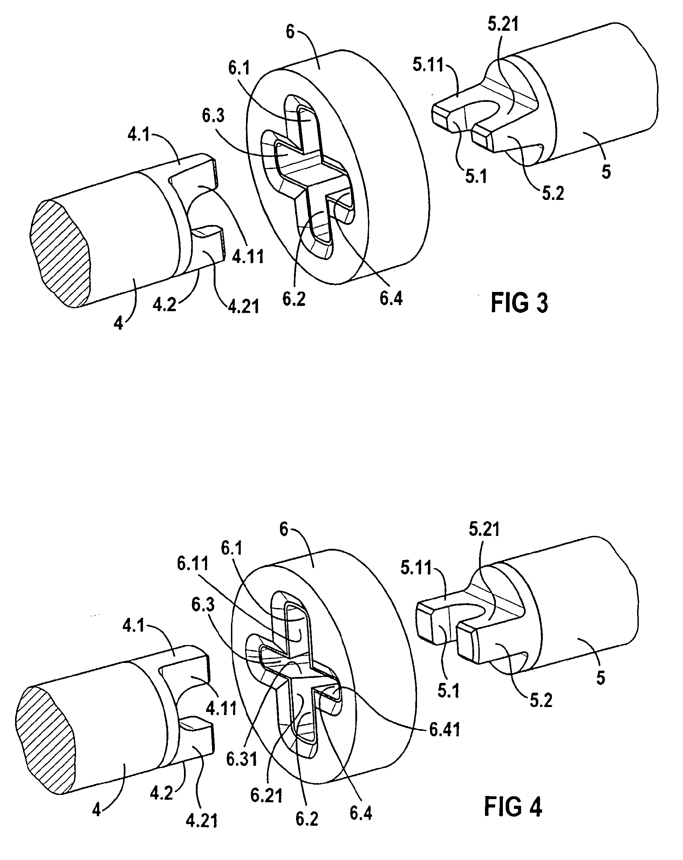

Die Drehmitnahme-Kupplung zwischen dem Rotorwellenende 4 einerseits und dem Pumpenwellenende 5 andererseits erfolgt - wie aus dem vergrößerten Ausschnitt gemäß FIG 2 und insbesondere gemäß FIG 3, 4 entnehmbar - kardangelenkartig, derart dass das Rotorwellenende 4 mit vorstehenden Flach-Mitnahmestegen, insbesondere Zweiflach-Mitnahmestegen 4.1;4.2 in entsprechende Mitnahmenuten, insbesondere Zweiflach-Mitnahmenuten 6.1;6.2, des Kupplungsstückes 6 und das Pumpenwellenende 5 mit Zweiflach-Mitnahmestegen 5.1;5.2 in korrespondierende Mitnahmenuten, insbesondere Zweiflach-Mitnahmenuten 6.3;6.4, des Kupplungsstückes 6 einsteckbar ist, die hier gegenüber den erstgenannten Mitnahmenuten beispielsweise um 90° gegen einander versetzt sind. Anstelle der in FIG 3,4 dargestellten Ausführung können auch im konstruktiven Umkehrprinzip Flach-Mitnahmestege an dem Kupplungsstück und korrespondierende Zweiflach-Mitnahmenuten an dem Rotorwellenende bzw. an dem Pumpenwellenende vorgesehen sein.

In den in den FIG 2-4 dargestellten Ausführungsvarianten sind das Rotorwellenende 4 und das Pumpenwellenende 5 unter geringer gegenseitiger Vorspannung in die als Mitnahmenut 6.1-6.4 ausgeführte, formschlüssige Steckaufnahme des Kupplungsstückes 6 einsteckbar.

Gemäß FIG 3 weisen die Zweiflach-Mitnahmestege 4.1;4.2 bzw. 5.1;5.2 an ihren bei einer Drehmitnahme wirksamen, an dem Kupplungsstück 6 anliegenden Mitnahmeflächen 4.11;4.21 bzw. 5.11 bzw.5.21 eine derartige konische Ausbildung auf, dass sie durch die gegenseitige leichte Vorspannung an den korrespondierenden planverlaufenden Mitnahmeflächen der Mitnahmenuten 6.1-6.4 mit Sicherheit zu einer spielfreien Anlage kommen. Die Mitnahmeflächen sind zweckmäßigerweise hinsichtlich beider Drehrichtungen mit entsprechender konischer Ausbildung versehen.

FIG 4 zeigt das grundsätzlich gleiche Lösungsprinzip gemäß FIG 3, jedoch ist die konische Ausbildung nunmehr an den zur Mitnahme zur Anlage kommenden Mitnahmeflächen 6.11-6.41 der Zweiflach-Mitnahmenuten 6.1-6.4 des Kupplungsstückes 6 vorgesehen und sind die Mitnahmeflächen der Zweiflach-Mitnahmestege 4.1;4.2 bzw. 5.1;5.2 des Rotorwellenendes 4 bzw. des Pumpenwellenendes 5 ohne gesonderte Bearbeitung hinsichtlich einer Konizität flachverlaufend ausgebildet.

## Patentansprüche

1. Motor-Pumpen-Aggregat, insbesondere für eine Kraftfahrzeug-Bremsvorrichtung,
- mit einem Elektromotor (1) und einer von diesem angetriebenen, axial nachgeordneten Pumpe (2); **dadurch gekennzeichnet, daß**
- eine kardangelenkartige Antriebsverbindung zwischen dem Elektromotor (1) und der Pumpe (2) über ein Kupplungsstück (6) mit jeweils einer formschlüssigen Steckaufnahme für ein abtriebsseitiges Rotorwellenende (4) des Elektromotors (1) und für ein antriebsseitiges Pumpenwellenende (5) der Pumpe (2) vorgesehen ist,
- eine Ausbildung der Steckaufnahme durch axial vorstehende, radial verlaufende Flach-Mitnahmestege (4.1;4.2 bzw. 5.1;5.2) an dem Rotorwellenende (4) und an dem Pumpenwellenende (5) einerseits oder an dem Kupplungsstück (6) andererseits und korrespondierende Flach-Mitnahmenuten (6.1-6.4), an dem Kupplungsstück (6) bzw. an dem Rotorwellenende (4) und an dem Pumpenwellenende (5) vorgesehen ist,
- eine axial konische Ausbildung der Steckaufnahme durch axial konische Anordnung der an dem Kupplungsstück(6) anliegenden Mitnahmeflächen (4.11;4.21 bzw. 5.11; 5.21) der Flach-Mitnahmestege (4.1; 4.2 bzw. 5.1;5.2), und einer axial planen Anordnung der korrespondierenden Mitnahmeflächen der Mitnahmenuten (6.1-6.4) vorgesehen ist und dass
- eine gegenseitige axiale Vorspannung des Rotorwellenendes (4) und des Pumpenwellenendes (5) im Sinne einer spielfreien Drehmitnahme vorgesehen ist.

2. Motor-Pumpen-Aggregat, insbesondere für eine Kraftfahrzeug-Bremsvorrichtung,
- mit einem Elektromotor (1) und einer von diesem angetriebenen, axial nachgeordneten Pumpe (2); **dadurch gekennzeichnet, dass**
- eine kardangelenkartige Antriebsverbindung zwischen dem Elektromotor (1) und der Pumpe (2) über ein Kupplungsstück (6) mit jeweils einer formschlüssigen Steckaufnahme für ein abtriebsseitiges Rotorwellenende (4) des Elektromotors (1) und für ein antriebsseitiges Pumpenwellenende (5) der Pumpe (2) vorgesehen ist,
- eine Ausbildung der Steckaufnahme durch axial vorstehende, radial verlaufende Flach-Mitnahmestege (4.1;4.2 bzw. 5.1;5.2) an dem Rotorwellenende (4) und an dem Pumpenwellenende (5) einerseits oder an dem Kupplungsstück (6) andererseits und korrespondierende Flach-Mitnahmenuten (6.1-6.4), an dem Kupplungsstück (6) bzw. an dem Rotorwellenende (4) und an dem Pumpenwellenende (5) vorgesehen ist,
- eine axial konische Ausbildung der Steckaufnahme durch axial konische Anordnung der an den Flach-Mitnahmestegen (4.1;4.2 bzw. 5.1;5.2) anliegenden Mitnahmeflächen (6.11-6.41) der Mitnahmenuten (6.1-6.4) und einer axial planen Anordnung der korrespondierenden Mitnahmeflächen (4.11;4.21 bzw. 5.11;5.21) der Mitnahmestege (4.1;4.2 bzw. 5.1;5.2) vorgesehen ist und dass
- eine gegenseitige axiale Vorspannung des Rotorwellenendes (4) und des Pumpenwellenendes (5) im Sinne einer spielfreien Drehmitnahme vorgesehen ist.

3. Bremsvorrichtung für ein Kraftfahrzeug, insbesondere ABS-Bremsvorrichtung
- mit einem Motor-Pumpen-Aggregat mit den Merkmalen aus zumindest einem der Ansprüche 1 oder 2.

## Claims

1. Motor/pump assembly, particularly for a motor vehicle braking device,
- with an electric motor (1) and with a pump (2) driven by the latter and arranged axially downstream, **characterized in that**
- a drive connection resembling a cardan joint is provided between the electric motor (1) and the pump (2) via a coupling piece (6), in each case with a positive plug receptacle for an output-side rotor-shaft end (4) of the electric motor (1) and for a drive-side pump-shaft end (5) of the pump (2),
- a design of the plug receptacle is provided by axially projecting, radially running flat take-up webs (4.1; 4.2 or 5.1; 5.2) on the rotor-shaft end (4) and on the pump-shaft end (5), on the one hand, or on the coupling piece (6), on the other hand, and by corresponding flat take-up grooves (6.1-6.4) on the coupling piece (6) or on the rotor-shaft end (4) and on the pump-shaft end (5),
- an axially conical design of the plug receptacle is provided by an axially conical arrangement of the take-up faces (4.11; 4.21 and 5.11; 5.21), bearing against the coupling piece (6), of the flat take-up webs (4.1; 4.2 or 5.1; 5.2) and by an axially planar arrangement of the corresponding take-up faces of the take-up grooves (6.1-6.4), and **in that**
- a mutual axial prestressing of the rotor-shaft end (4) and of the pump-shaft end (5) with the effect of a play-free rotational take-up is provided.

2. Motor/pump assembly, particularly for a motor vehicle braking device,
- with an electric motor (1) and with a pump (2) driven by the latter and arranged axially downstream, **characterized in that**
- a drive connection resembling a cardan joint is provided between the electric motor (1) and the pump (2) via a coupling piece (6), in each case with a positive plug receptacle for an output-side rotor-shaft end (4) of the electric motor (1) and for a drive-side pump-shaft end (5) of the pump (2),
- a design of the plug receptacle is provided by axially projecting, radially running flat take-up webs (4.1; 4.2 and 5.1; 5.2) on the rotor-shaft end (4) and on the pump-shaft end (5), on the one hand, or on the coupling piece (6), on the other hand, and by corresponding flat take-up grooves (6.1-6.4) on the coupling piece (6) or on the rotor-shaft end (4) and on the pump-shaft end (5),
- an axially conical design of the plug receptacle is provided by an axially conical arrangement of the take-up faces (6.11-6.41), bearing against the flat take-up webs (4.1; 4.2 and 5.1; 5.2), of the take-up grooves (6.1-6.4) and by an axially planar arrangement of the corresponding take-up faces (4.11; 4.21 and 5.11; 5.21) of the take-up webs (4.1; 4.2 and 5.1; 5.2), and **in that**
- a mutual axial prestressing of the rotor-shaft end (4) and of the pump-shaft end (5) with the effect of a play-free rotational take-up is provided.

3. Braking device for a motor vehicle, particularly an ABS braking device,
- with a motor/pump assembly having the features from at least either one of Claims 1 and 2.

## Revendications

1. Ensemble moteur et pompe, notamment pour un dispositif de freinage de véhicule à moteur,
- comprenant un moteur électrique (1) et une pompe (2) disposée axialement en amont de, et entraînée par, celui-ci ; **caractérisé en ce que**
- il est prévu entre le moteur électrique (1) et la pompe (2) une liaison d'entraînement à cardan par le biais d'une pièce d'accouplement (6) avec un réceptacle embrochable à liaison par coopération de formes pour un bout d'arbre de rotor côté entraîné (4) du moteur électrique (1) et pour un bout d'arbre de pompe côté entraînement (5) de la pompe (2), respectivement,
- il est prévu une réalisation du réceptacle embrochable par des doigts d'entraînement plats qui s'étendent radialement et dépassent axialement (4.1 ; 4.2 ou 5.1 ; 5.2) sur le bout d'arbre de rotor (4) et sur le bout d'arbre de pompe (5) d'une part ou sur la pièce d'accouplement (6) d'autre part, ainsi que des rainures d'entraînement plates (6.1 à 6.4) correspondantes sur la pièce d'accouplement (6) ou sur le bout d'arbre de rotor (4) et sur le bout d'arbre de pompe (5),
- il est prévu une configuration axiale conique du réceptacle embrochable par un agencement axial conique des surfaces d'entraînement (4.11 ; 4.21 ou 5.11 ; 5.21) des doigts d'entraînement plats (4.1 ; 4.2 ou 5.1 ; 5.2) en contact avec la pièce d'accouplement (6) et un agencement axial plan des surfaces d'entraînement correspondantes des rainures d'entraînement (6.1 à 6.4), et
- il est prévu une précontrainte axiale réciproque du bout d'arbre de rotor (4) et du bout d'arbre de pompe (5) en vue d'un entraînement en rotation exempt de jeu.

2. Ensemble moteur et pompe, notamment pour un dispositif de freinage de véhicule à moteur,
- avec un moteur électrique (1) et une pompe (2) disposée axialement en amont de, et entraînée par, celui-ci ; **caractérisé en ce que**
- il est prévu entre le moteur électrique (1) et la pompe (2) une liaison d'entraînement à cardan par le biais d'une pièce d'accouplement (6) avec un réceptacle embrochable à coopération de formes pour un bout d'arbre de rotor côté entraîné (4) du moteur électrique (1) et pour un bout d'arbre de pompe côté entraînement (5) de la pompe (2), respectivement,
- il est prévu une réalisation du réceptacle embrochable par des doigts d'entraînement plats qui s'étendent radialement et dépassent axialement (4.1 ; 4.2 ou 5.1 ; 5.2) sur le bout d'arbre de rotor (4) et sur le bout d'arbre de pompe (5) d'une part ou sur la pièce d'accouplement (6) d'autre part, ainsi que des rainures d'entraînement plates (6.1 à 6.4) correspondantes sur la pièce d'accouplement (6) ou sur le bout d'arbre de rotor (4) et sur le bout d'arbre de pompe (5),
- il est prévu une configuration axiale conique du réceptacle embrochable par un agencement axial conique des surfaces d'entraînement (6.11 à 6.41) des rainures d'entraînement (6.1 à 6.4) en contact avec les doigts d'entraînement (4.1 ; 4.2 ou 5.1 ; 5.2) et un agencement axial plan des surfaces d'entraînement (4.11 ; 4.21 ou 5.11 ; 5.21) correspondantes des doigts d'entraînement (4.1 ; 4.2 ou 5.1 ; 5.2), et
- il est prévu une précontrainte axiale réciproque du bout d'arbre de rotor (4) et du bout d'arbre de pompe (5) en vue d'un entraînement en rotation exempt de jeu.

3. Dispositif de freinage pour un véhicule à moteur, notamment un dispositif de freinage ABS,
- avec un ensemble moteur et pompe ayant les caractéristiques de l'une au moins des revendications 1 ou 2.
